(19) Europäisches Patentamt
European Patent Office
Office européen des brevets

(11) **EP 0 782 810 B1**

(12) **EUROPÄISCHE PATENTSCHRIFT**

(45) Veröffentlichungstag und Bekanntmachung des Hinweises auf die Patenterteilung:
**23.05.2001 Patentblatt 2001/21**

(21) Anmeldenummer: **95931911.2**

(22) Anmeldetag: **22.09.1995**

(51) Int Cl.⁷: **H04Q 3/545**

(86) Internationale Anmeldenummer:
**PCT/DE95/01318**

(87) Internationale Veröffentlichungsnummer:
**WO 96/09728 (28.03.1996 Gazette 1996/14)**

(54) **VERFAHREN UND ANORDNUNG ZUR AUFLÖSUNG VON LEISTUNGSMERKMAL-INTERAKTIONEN IN EINEM KOMMUNIKATIONSSYSTEM**

METHOD AND ARRANGEMENT FOR RESOLVING PERFORMANCE FEATURE INTERACTIONS IN A COMMUNICATION SYSTEM

PROCEDE ET DISPOSITIF POUR LA RESOLUTION D'INTERACTIONS DE CARACTERISTIQUES DE PERFORMANCE DANS UN SYSTEME DE COMMUNICATION

(84) Benannte Vertragsstaaten:
**CH DE FR GB IT LI**

(30) Priorität: **22.09.1994 DE 4433878**

(43) Veröffentlichungstag der Anmeldung:
**09.07.1997 Patentblatt 1997/28**

(73) Patentinhaber: **SIEMENS AKTIENGESELLSCHAFT**
**80333 München (DE)**

(72) Erfinder: **FRITSCHE, Norbert**
**D-80809 München (DE)**

(56) Entgegenhaltungen:
**WO-A-95/22222**

- **INTERNATIONAL SWITCHING SYMPOSIUM - PAPER A12.4, Bd. 4, 15. - 20. März 1987, PHOENIX (US), Seiten 964-968, XP002004334 K. SATO ET AL: "Hierarchical network data management architecture applied to the public telephone network"**
- **IEICE TRANSACTIONS 0N COMMUNICATIONS, Bd. E75-B, Nr. 10, Oktober 1992, TOKYO (JP), Seiten 1052-1060, XP000324953 F. SATO ET AL: "Functional elements for switching software based on object-oriented paradigm with UPT as an example"**
- **IEEE GLOBAL TELECOMMUNICATIONS CONFERENCE, Bd. 3, 29. November 1993 - 2. Dezember 1993, HOUSTON (US), Seiten 1931-1937, XP000436144 R. CHIPALKATTI ET AL: "A prototype of a service management system for the Intelligent Network"**
- **PHILIPS TELECOMMUNICATION REVIEW, Bd. 50, Nr. 1, März 1992, HILVERSUM (NL), Seiten 34-38, XP000374520 M. ELIXMANN ET AL: "Service Creation Environment - a development environment for services in the Intelligent Network"**

EP 0 782 810 B1

**Beschreibung**

Die Erfindung betrifft ein Verfahren und eine Anordnung zur Auflösung von Leistungsmerkmal-Interaktionen in einem Kommunikationssystem mit voneinander entkoppelter Vermittlungs-steuerung und Leistungsmerkmalsteuerung, also in sogenannten IN-artigen Architekturen (IN bedeutet in diesem Zusammenhang Intelligente Netze).

Heutige Vermittlungssysteme unterstützen eine Vielzahl von Leistungsmerkmalen. Dies sind Telekommunikationszusatzdienste, wie z. B.

- Rufumleitung CFU
- Rufumleitung bei besetzt CFBS
- Rufumleitung bei frei CFNR
- Kurzwahl SD
- Selektiver Anrufschutz TCS
- Rückfrage CC, Makeln CA, Umlegen CT
- Anklopfen CO, Anklopfer übernehmen TCO
- Konferenz CONF
- Autom. Rückruf bei besetzt ARBS

Zwei Arten von Leistungsmerkmalen sind zu unterscheiden. Einmal gibt es Leistungsmerkmale, die explizit aktiviert werden (FReq) und daraufhin über das Eintreffen des initiierenden Ereignisses aufgerufen werden. Als Beispiel hierzu kann CFU genannt werden. Dann gibt es Leistungsmerkmale, die direkt aufgerufen werden (über FReq) ohne vorher aktiviert worden zu sein, d.h. Aktivierung und Aufruf fallen zusammen. Als Beispiel hierzu kann CONF od. CC genannt werden. Alle Leistungsmerkmale können hierbei mit Hilfe einer "Aktivierungs"-Meldung FReq angefordert werden.

Leistungsmerkmale sind in prozessorgesteuerten Vermittlungsanlagen innerhalb der Vermittlungssteuerabläufe realisiert. Diese Vermittlungssteuerabläufe, auch Vermittlungs-Software genannt, beinhalten die Rufsteuerung sowie die Leistungsmerkmale. Hierbei sind die Leistungsmerkmale mit der Rufsteuerung sowie untereinander verwoben. Dies führt zu einer hohen Software-Komplexität, wodurch die Softwarestruktur bezüglich der Einführung neuerer Leistungsmerkmale unflexibel wird. Um die dadurch bedingten langen Einführungszeiten für neue Leistungsmerkmale zu verkürzen, ist überlegt worden, die bisher voneinander abhängigen Teile der Steuerabläufe voneinander getrennt in eigenständigen Modulen zu realisieren, die jeweils eine feste Schnittstelle nach außen besitzen. Ansätze zur Trennung der Leistungsmerkmalsteuerung von der Vermittlungssteuerung werden im Rahmen der sich mit intelligenten Netzen beschäftigenden Standardisierungsvorgänge "Intelligent Network" bei ITU-T SG 11 verfolgt. Siehe hierzu die Richtlinien des CCITT: "New Recommendation Q.1214, Distributed Functional Plane for Intelligent Network CS-1, COM XI-R212-E, Seiten 7 bis 69 sowie Anlageseiten 7 bis 9; siehe auch IEICE TRANSACTIONS ON COMMUNICATIONS, Bd. E75-B, No.

10, October 1992, Tokyo, JP, Seiten 1052 bis 1060; F. SATO et al.

Durch Entkopplung der Leistungsmerkmalsteuerung von der Vermittlungssteuerung, die hierbei auf ihre Grundfunktionalität reduziert wird, entsteht eine sauber strukturierte Vermittlungsarchitektur. Diese ist sehr modular aufgebaut und erlaubt die schnelle Einführung neuer Leistungsmerkmale. Außerdem wird durch die Trennung der Leistungsmerkmale eine von den Leistungsmerkmalen und der Rufsteuerung unabhängige Entwicklung ermöglicht.

Eine solche Struktur teilt ein Vermittlungssystem bzw. die Vermittlungs-Software in ein Basisvermittlungssystem und ein Leistungsmerkmalsystem, d. h., die Vermittlungssteuerung und die Leistungsmerkmalsteuerung sind voneinander entkoppelt. Hauptbestandteile eines Basisvermittlungssystems sind eine Rufsteuerung, eine Datenbasis und eine Vielzahl von Leistungsmerkmalsteuerbausteinen. Die Rufsteuerung wird auf ihre grundlegenden Aufgaben, den Auf- und Abbau von Verbindungen bzw. Rufen, reduziert und deshalb als Basisrufsteuerung bezeichnet. Die Leistungsmerkmalsteuerbausteine bilden hierbei einen Satz von Funktionen, über die auf die Rufobjekte Ruf, Teilnehmer und Verbindung zugegriffen werden kann, über die also Rufe manipuliert werden können.

Die Leistungsmerkmale selbst sind in dem Leistungsmerkmalsystem enthalten, das über ein Protokoll mit dem Basisvermittlungssystem kommuniziert.

Die Basisrufsteuerung des Basisvermittlungssystems hat die Aufgabe, den Auf- und Abbau von Rufen bzw. deren zugehörigen Verbindungen nach Teilnehmeranforderungen durchzuführen. Sie behandelt folglich im Rahmen ihres Normalablaufes einen Zwei-Teilnehmerruf. Darüber hinaus sind Mechanismen zum Melden bestimmter Ereignisse an die Leistungsmerkmalsteuerung vorgesehen. Das Basisvermittlungssystem kann ohne Einflußnahme des Leistungsmerkmalsystemes einen Ruf zwischen zwei Teilnehmern steuern, d.h., es ist bezüglich des Auf- und Abbaus von Zwei-Teilnehmerrufen autark. Ein Zwei-Teilnehmerruf besteht zwischen zwei jeweils Teilnehmeranschlußeinheiten zugeordneten Kommunikationsendgeräten mit jeweils einer Verbindung, die den Bezug zwischen einem Kommunikationsendgerät und dem Ruf herstellt. Jeder Verbindung ist jeweils ein Zustandsautomat als Zustandsautomat der Verbindung zugeordnet. Die Verbindungen sind über den Ruf miteinander verknüpft.

Zwischen den Zuständen der Zustandsautomaten finden bestimmte Übergänge statt, die aufgrund von äußeren Anreizen ausgelöst werden. Solche Anreize sind Teilnehmer/Netz-Meldungen oder Internmeldungen, nämlich Meldungen zwischen den beiden Verbindungen eines Rufes.

Zwischen einzelnen, gleichzeitig aktivierten, zu aktivierenden, aufgerufenen oder aufzurufenden Leistungsmerkmalen kommt es zu "Leistungsmerkmal-Interaktionen". Der Begriff "Leistungsmerkmal-Interaktionen" umfaßt hierbei alle Interaktionen, die im Zusammenhang mit der gewünschten Operation eines Leistungsmerkmals LM stehen. Dies sind Interaktionen des Leistungsmerkmals mit seiner Umgebung, d.h. anderen Leistungsmerkmalen, aber auch anderen Aufrufen (Aktivierungen) des selben Leistungsmerkmals.

Unzulässige Leistungsmerkmal-Interaktionen können zu Störungen des Vermittlungsablaufs wie zum Beispiel Stillstände des Funktionsablaufs (Deadlocks) sowie Inkonsistenzen führen. Daher ist es empfehlenswert, die Leistungsmerkmal-Interaktionen aufzulösen um solche Störungen zu vermeiden.

Aufgabe der vorliegenden Erfindung ist es, ein hierzu geeignetes Verfahren anzugeben.

Diese Aufgabe wird durch ein Verfahren mit den Merkmalen des Anspruch 1 gelöst. Günstige Ausgestaltungen der Erfindung sind Gegenstand von Unteransprüchen.

Eine weitere Aufgabe ist es, eine Anordnung zur Durchführung eines solchen Verfahrens anzugeben.

Diese Aufgabe wird in einem Kommunikationssystem mit voneinander entkoppeltem Basisvermittlungssystem und Leistungsmerkmalsystem durch einen Leistungsmerkmal-Interaktions-Manager an der Ereignis-Schnittstelle zwischen Basisvermittlungssystem (Basic Switching Node) BSN und Leistungsmerkmalsystem (Feature Node) FN gelöst, der die Auflösung der Leistungsmerkmal-Interaktionen steuert.

Nachstehend wird die Erfindung unter Bezugnahme auf die Figuren anhand von Ausführungsbeispielen näher erläutert.

Es zeigt

Figur 1 die Leistungsmerkmal-Interaktion zwischen Leistungsmerkmalen unter Berücksichtigung von deren Rollen und Teilnehmeranschlußeinheiten;

Figur 2 die Anordnung eines Leistungsmerkmal-Interaktions-Managers innerhalb eines Kommunikationssystemes mit voneinander entkoppelter Leistungsmerkmalsteuerung und Vermittlungssteuerung sowie die Art der Verteilung von durch die Vermittlungssteuerung über eine Schnittstelle der Leistungsmerkmalsteuerung übermittelten Ereignissen an unterschiedlich geartete sowie in einem unterschiedlichen Zustand befindliche Leistungsmerkmale;

Figur 3 die komplexe Problematik der Leistungsmerkmal-Interaktionen und die Lokalität von evtl. interagierenden Leistungsmerkmalen an einer beispielhaften Rufstruktur und Leistungsmerkmalverteilung;

Figur 4 den Zusammenhang von Leistungsmerkmalen, Rollen und Teilnehmeranschlußeinheiten;

Figur 5 die Rolle des Leistungsmerkmals Rufumleitung, unterschieden nach Aktivierung und Aufruf des Leistungsmerkmals;

Figur 6 ein Beispiel für Leistungsmerkmal-Interaktionen unter Darstellung der beteiligten Teilnehmeranschlußeinheiten und den zugeordneten Rollen; und

Figur 7 einen Auszug aus einer Rollenverträglichkeitsmatrix.

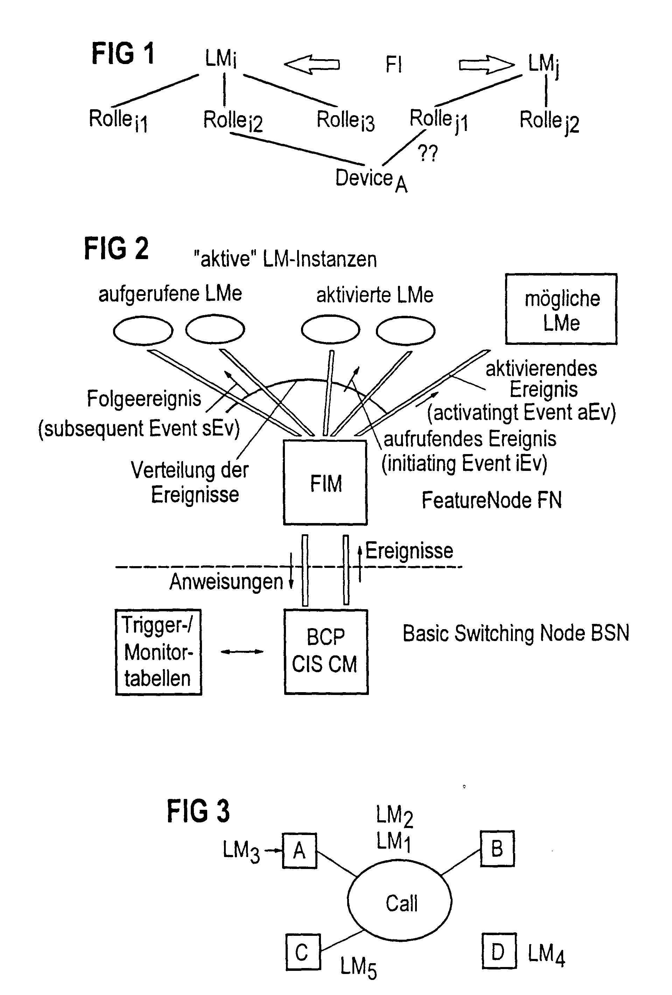

In einer Ausgestaltungsform der Erfindung hat der Leistungsmerkmal-Interaktions-Manager die Aufgabe der korrekten Verteilung der vom Basisvermittlungssystem BSN generierten Ereignisse auf die aktiven, aktivierten bzw. zu aktivierenden Leistungsmerkmale (siehe FIG. 2).

Sind bestimme Leistungsmerkmale bereits aktiviert oder aufgerufen, so ist die erfindungswesentliche Aufgabe des Leistungsmerkmal-Interaktions-Managers FIM die Kompatibilitätsprüfung bei Eintreffen einer weiteren Leistungsmerkmal-Anforderung (= Aktivierung) (FReq) oder eines Aufrufereignisses.

Dies bedeutet das Prüfen der Verträglichkeit des angeforderten Leistungsmerkmals mit bereits aktivierten bzw. aktiven (= aufgerufenen) Leistungsmerkmalen.

Eine weitere Aufgabe des Leistungsmerkmal-Interaktions-Managers ist das Sicherstellen der Benutzeranforderungen für das Leistungsmerkmal-Zusammenspiel und somit die Überwachung der Einhaltung der Leistungsmerkmal-Spezifikation.

Außerdem gewährleistet der Leistungsmerkmal-Interaktions-Manager das Zusammenspiel koexistierender Leistungsmerkmale, sorgt also für das Vermeiden von Deadlocks und Inkonsistenzen.

Sind bestimmte, an einem bestimmten Ereignis interessierte Leistungsmerkmale, und zwar zu aktivierende (activating Event), aufzurufende, d.h. zu startende (initiating Event), oder auch auf Folgeereignisse wartende (subsequent Event) Leistungsmerkmale bereits aufgerufen, so kann eine weitere Aufgabe des Leistungsmerkmal-Interaktions-Managers die Verteilung des entsprechenden Ereignisses sein. Als Ereignis in diesem Sinne ist das Eintreffen irgendeiner Meldung von der Basisrufsteuerung oder einer Teilnehmeranschlußeinheit (TAE = Device) zu vertehen. Der Leistungsmerkmal-Interaktions-Manager entscheidet also, welchen aufgerufenen, aktivierten und/oder zu aktivierenden Leistungsmerkmalen das Ereignis zugeleitet wird, wenn mehrere Interessenten vorhanden sind.

Prinzipiell lassen sich zwei Arten von Leistungsmerkmal-Interaktionen unterscheiden. Es gibt funktionale Interaktionen, auch semantische Interaktionen genannt, die das funktionale Zusammenspiel von Leistungsmerkmalen im Sinne des funktionalen Leistungsmerkmal-Steuerablaufs betreffen. Diese sind in ihrer Wirkung für den Benutzer sichtbar. Sie sind benutzerbezogen, beeinflussen den funktionalen, spezifizierten Leistungsmerkmal-Ablauf und treten bei Aktivierung bzw. Aufruf auf. Sie berühren die Kompatibilität zwischen Leistungsmerkmalen. Über die Art ihrer Behandlung entscheiden Benutzeranforderungen, die beispielsweise durch Spezifikation festgelegt sind. Wenn beispielsweise der Initiator des Leistungsmerkmals "Automatischer Rückruf im Besetztfall" (ARBS) "Rufumleitung" (CFU) aktiviert hat, ist durch die Spezifikation festgelegt, ob ein Rückruf umgeleitet werden soll.

Die speziellen Anforderungen erfindungsgemäßer Verfahren sind für zu aktivierende Leistungsmerkmale anders als für aufzurufende Leistungsmerkmale:

- Bei der Aktivierung des Leistungsmerkmals $LM_i$ ($FReq(LM_i)$) wird seine Verträglichkeit mit bereits aktivierten (z.B.: Rufumleitung CFU, Automatischer Rückruf bei besetzt ARBS) bzw. aufgerufenen Leistungsmerkmalen (z.B.: Rückfrage CC, Konferenz CONF) geprüft. Konflikte bezügl. der Zuordnung der Aktivierungsmeldung können nicht auftreten, da der Leistungsmerkmal-Bezeichner eindeutig ist. Es kann jedoch erforderlich sein, für die Koexistenz beider Leistungsmerkmale notwendige Maßnahmen einzuleiten.

- Beim Aufruf des Leistungsmerkmals $LM_i$ ($FReq(LM_i)$, oder beim Auftreten des aufrufenden Ereignisses ($iEv_{LMi}$) wird die Verträglichkeit des Leistungsmerkmals $LM_i$ mit bereits aktivierten bzw. aufgerufenen Leistungsmerkmalen geprüft. Konflikte bezügl. der Zuordnung der Aufrufmeldung können nur beim Aufruf eines Leistungsmerkmals durch ein Ereignis nach vorhergegangener Aktivierung auftreten. Es kann jedoch erforderlich sein, für die Koexistenz beider Leistungsmerkmale notwendige Maßnahmen einzuleiten.

Zur Prüfung von Verträglichkeiten zwischen beliebig gearteten Leistungsmerkmalen ist die Menge der zu betrachtenden Leistungsmerkmale und ihre Lokalität zu bestimmen, d.h., es muß festgestellt werden, welche Aktivierungen welcher Teilnehmeranschlußeinheiten und welche rufbezogenen Leistungsmerkmale wie zu berücksichtigen sind. Dies ist sehr aufwendig. In dem in Figur 3 gezeigten Beispiel soll das Leistungsmerkmal $LM_3$ für die Teilnehmeranschlußeinheit A aktiviert werden und es ist zu bestimmen, welche anderen Leistungsmerkmale für diese Aktivierung zu berücksichtigen sind. Hierbei ist zu berücksichtigen, daß die Teilnehmeranschlußeinheit A Partner des Rufs Call ist, an dem noch die Partner B und C beteiligt sind, daß für den Ruf Call die Leistungsmerkmale $LM_1$ und $LM_2$ aufgerufen sind und daß für die Teilnehmeranschlußeinheit C das Leistungsmerkmal $LM_5$ aktiviert ist. Das für die Teilnehmeranschlußeinheit D aktivierte Leistungsmerkmal $LM_4$ muß ggf. auch berücksichtigt werden, wenn die Teilnehmeranschlußeinheit D in den Steuerablauf des Leistungsmerkmals $LM_3$ einbezogen werden soll.

Es erweist sich als nützlich die Teilnehmeranschlußeinheit (TAE) als Bezugspunkt einzuführen, um Verträglichkeiten lokal durch Prüfung aller mit Leistungsmerkmalen zusammenhängenden Teilnehmeranschlußeinheit-Charakteristiken behandeln zu können. Leistungsmerkmale werden hierzu in Rollen unterteilt, die von in den Leistungsmerkmal-Steuerablauf einbezogenen Teilnehmeranschlußeinheiten übernommen werden.

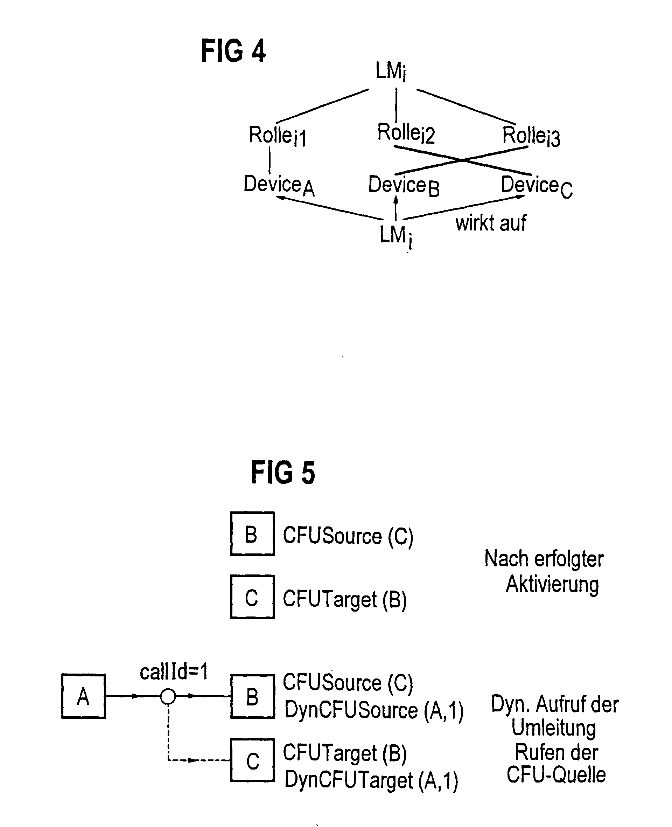

Figur 4 zeigt das Verhältnis zwischen Leistungsmerkmalen $LM_i$, Rollen $Rolle_{i1}$, $Rolle_{i2}$ und $Rolle_{i3}$ sowie Teilnehmeranschlußeinheiten $Device_A$, $Device_B$ und $Device_C$. Hierbei wirkt das Leistungsmerkmal $LM_i$ auf die Teilnehmeranschlußeinheiten $Device_A$, $Device_B$ und $Device_C$ und ist in Rollen $Rolle_{i1}$ $Rolle_{i2}$ und $Rolle_{i3}$ aufgeteilt. Die von der Teilnehmeranschlußeinheit $Device_A$ übernommene Rolle $Rolle_{i1}$ unterscheidet sich von den in ihrer Funktion gegeneinander austauschbaren Rollen $Rolle_{i2}$ und $Rolle_{i3}$, die von den Teilnehmeranschlußeinheiten $Device_B$ und $Device_C$ übernommen werden.

Teilnehmeranschlußeinheiten nehmen im Leistungsmerkmal-Lebenszyklus, d.h. beim Durchlaufen des Leistungsmerkmal-Zustandsautomaten, bestimmte "Rollen" ein, werden also in bestimmter Art und Weise in den Leistungsmerkmal-Steuerablauf einbezogen. Diese Rollenübernahme ist gekoppelt an bestimmte Ereignisse, die für den Leistungsmerkmal-Steuerablauf wichtig sind. Diese Ereignisse entscheiden über die "Lebensdauer" der verschiedenen Rollen für eine Teilnehmeranschlußeinheit, die an einem Leistungsmerkmal beteiligt ist.

Das in Figur 5 mit seinen Rollen dargestellte Leistungsmerkmal Rufumleitung CFU (Call Forwarding Unconditional) besitzt beispielsweise sowohl statische Rollen, die von den Teilnehmeranschlußeinheiten bei der Aktivierung übernommen werden, als auch dynamische, die beim Aufruf der Umleitung, also bei kommendem Ruf zur Umleitungsquelle übernommen werden. Diese dynamischen Rollen werden beim Aufruf zusätzlich zu den statischen angefordert. In FIG 5 sind die Rollen mit den jeweils gültigen Rollenparametern dargestellt, wobei die dynamischen Rollen zusätzlich zu dem Teilnehmeranschlußeinheit-Parameter A noch den Ruf-Parameter callID 1 enthalten.

Der Zusammenhang zwischen Leistungsmerkmal-Interaktionen und der Rollenübernahme wird nachstehend anhand der FIG 1 näher erläutert.

In den verschiedenen Zuständen des Leistungsmerkmals werden den am Leistungsmerkmal-Steuerablauf beteiligten Teilnehmeranschlußeinheiten verschiedenen Rollen zugewiesen. Diese müssen mit bereits übernommenen Leistungsmerkmal-Rollen verträglich sein. Somit wird die Leistungsmerkmal-Interaktions-Behandlung für die Aktivierung und den Aufruf von Leistungsmerkmalen auf eine Kompatibilitätsprüfung zwischen "zu übernehmender Rolle" und bereits "innehabender Rolle" abgebildet. Die Interaktion zwischen zwei Leistungsmerkmalen wird also auf die Prüfung der Verträglichkeit zwischen zwei Rollen abgebildet, wenn die betroffene Teilnehmeranschlußeinheit die mit dem zweiten Leistungsmerkmal verbundene Rolle übernehmen will. Außerdem wird dadurch eine komplexe Verträglichkeitsprüfung zwischen Leistungsmerkmalen in mehrere einfachere Rollenprüfungen untergliedert.

Die Rolle wird, falls erforderlich, parametrisiert, um den Bezug zu Partnerrollen anderer beteiligter Endgeräte, aber auch zum Ruf, der der dynamischem Leistungsmerkmal-Steuerung unterliegt, herzustellen.

FIG1 zeigt die Leistungsmerkmal-Interaktion FI zwischen den Leistungsmerkmalen $LM_i$ und $LM_j$. Die Teilnehmeranschlußeinheit $Device_A$ soll zusätzlich zur bestehenden $Rolle_{i2}(LM_i)$ die $Rolle_{j1}(LM_j)$ übernehmen. Die Auflösung der Leistungsmerkmal-Interaktion FI wird durch die auf $Device_A$ bezogene Verträglichkeitsprüfung der Rollen $Rolle_{j1}(LM_j)$ und $Rolle_{i2}(LM_i)$ beschränkt.

Die Auftrennung des Leistungsmerkmal-Interaktions-Verfahrens für die Fälle Rollenübernahme bei Aktivierung (Aktivierungsmeldung: $FReq(LM_i)$) und bei Aufruf eines Leistungsmerkmals ($FReq(LM_i)$, oder $iEv_{LMi}$) erweist sich als notwendig, weil einerseits die Spezifikation eine unterschiedliche Behandlungsweise der Aktivierung gegenüber dem Aufruf erfordert (z.B. max. 3-fach Umleiten) und außerdem die Eingriffsmöglichkeiten zur Auflösung der Interaktionen bei Aktivierung und Aufruf unterschiedlich sind. Nach der Aktivierung kann ein Aufruf noch blockiert werden. Demgegenüber sind nach einem Aufruf die Eingriffsmöglichkeiten zur Auflösung der Leistungsmerkmal-Interaktion gering und die Gewährleistung der Koexistenz mit anderen Leistungsmerkmalen schwierig.

Die Leistungsmerkmal-Rollen werden durch die Leistungsmerkmal-Spezifikation unter Berücksichtigung der nachfolgenden Aspekte definiert:

- eine Rollendefinition ist für jedes Leistungsmerkmal notwendig;
- die Rolle beschreibt Wirkungsweise des Leistungsmerkmals auf die Teilnehmeranschlußeinheit;
- die Rolle ist eventuell parametrisiert;
- Lebensdauer:

  - Wie lange hat die Teilnehmeranschlußeinheit die Rolle inne ?
  - Ändert sich die Rolle im Leistungsmerkmal-Steuerablauf ?
  - Welche Ereignisse sind für Rollenübernahme maßgeblich ?
  - Welche Ereignisse sind für Rollenabgabe verantwortlich ?

- Rollenkompatibilität mit bestehenden Leistungsmerkmal-Rollen
- Aktivierungs- / Aufrufrolle
- Statische / dynamische Rollen
- Rollenprioritäten

Die Teilnehmeranschlußeinheit bildet den Bezugspunkt für die Übernahme einer Leistungsmerkmal-Rolle. Sie kann eine Rolle sowohl explizit, durch Anforderung, als auch implizit, durch Einbeziehung in einen Leistungsmerkmal-Steuerablauf, der von einer anderen Teilnehmeranschlußeinheit initiiert wurde, übernehmen.

Dynamische Rollen werden von Teilnehmeranschlußeinheiten übernommen, wenn ein Leistungsmerkmal aufgerufen wird, das entweder keine explizite Aktivierung besitzt (z.B. Rückfrage), d.h. Aktivierung und Aufruf fallen zusammen, oder ein aktiviertes Leistungsmerkmal durch das Eintreffen eines Ereignisses aufgerufen wird. Für dynamische Rollen ist es wichtig den Call-Bezug herzustellen, um bei der Rollenprüfung feststellen zu können, ob z.B. ein kommender Ruf einem bestimmten Leistungsmerkmal unterliegt (z.B. Konferenzaufbau), so daß dieser mit den bestehenden Rollen der Teilnehmeranschlußeinheiten anders interagiert, als ein normaler kommender Zwei-Teilnehmer-Ruf. Deshalb wird die Ruf-Kennung Call-Id für diese Rollen als Parameter angegeben. Außerdem wird das Weitergeben von dynamischen Rollen vereinfacht. Bei Rufumleitung werden z.B. alle dynamischen Rollen der Rufumleitungsquelle, die sich auf den umzuleitenden Ruf beziehen, zum Rufumleitungsziel weitergegeben. Als Nachteil dieses Call-Bezugs erweist sich, daß bei Anforderung der dynamischen Rolle durch das Leistungsmerkmal die Call-Id bekannt sein muß.

Sieht man von einem Call-Bezug ab, so müssen die Teilnehmeranschlußeinheit-Abhängigkeiten der Rollen stark erweitert werden, so daß eine sehr komplexe Parameterprüfung notwendig wird, um entscheiden zu können, ob ein bestimmter Ruf einem Leistungsmerkmal unterliegt.

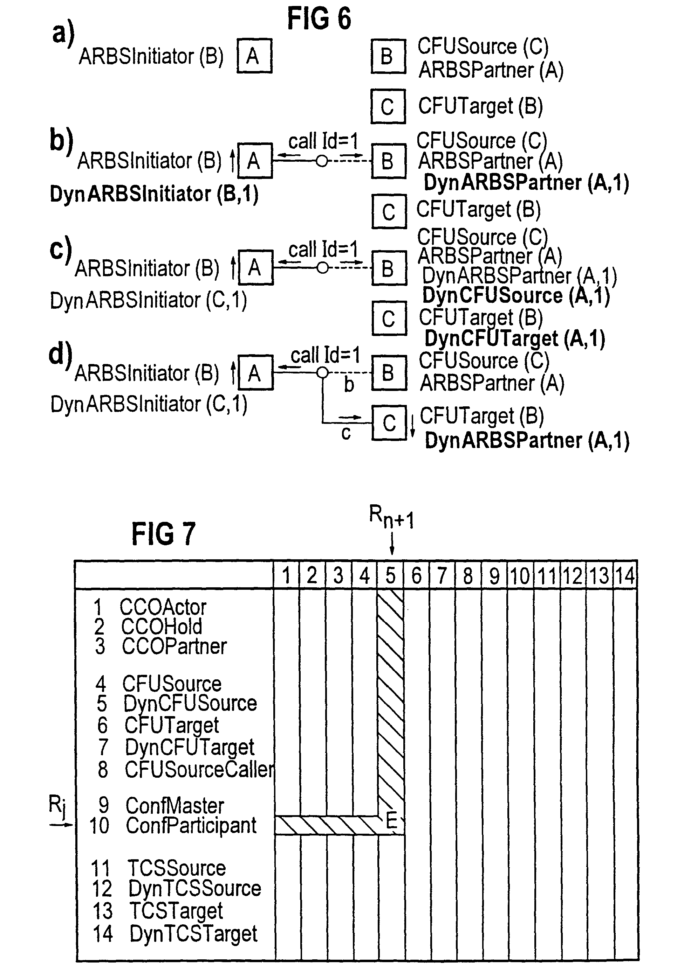

Das Prinzip der Rollen, die durch Teilnehmeranschlußeinheiten im Verlauf der Leistungsmerkmal-Steuerung übernommen werden, erlaubt die paarweise Prüfung auf Kompatibilität, wobei eine Rolle zu einer bereits bestehenden hinzugenommen werden soll. Hier kann durch geeignete Tabellen eine Aktion eingebunden werden, die die Interaktion zweier Rollen bzw. zweier Leistungsmerkmale regelt. Eine solche Prüfung wird durch die Verwendung einer Rollenverträglichkeits-Matrix stark vereinfacht. Figur 7 zeigt einen Auszug aus einer solchen Rollenkompatibilitätsmatrix mit 14 verschiedenen Rollen.

Generell darf eine Teilnehmeranschlußeinheit mehrere Rollen übernehmen. Bei der Übernahme wird aber die paarweise Verträglichkeit mit bereits bestehenden Rollen geprüft. Das Zusammenspiel von n Rollen wird bei der Hinzunahme der n+1 Rolle auf n Prüfungen abgebildet.

Die in Figur 7 zu klärende Verträglichkeitsfrage für die Rollenübernahme lautet:
Darf die Teilnehmeranschlußeinheit $TAE_i$ die Rolle $R_{n+1}$

übernehmen, wenn sie bereits die Rolle $R_j$ inne hat ? Dargestellt ist der Fall der Anforderung der Rolle Dyn-CFUSource, d.h. Aufruf einer Rufumleitung, unter der Bedingung, daß die Teilnehmeranschlußeinheit Conf-Participant, d.h. Teilnehmer einer Konferenz, ist. Der Eintrag E der Matrix spezifiziert sowohl die Verträglichkeit der Rollen, das anzuwendende Prüfverfahren, als auch die notwendigen Aktionen bei Rollenübernahme.

Eine Rollenübernahme wird vor allem bei der Aktivierung, bzw. beim Aufruf eines Leistungsmerkmals bzw. einer Leistungsmerkmal-Instanz durchgeführt. Folgende zwei Aktionen sind bei dieser Rollenanforderung notwendig:

- Prüfen der Verträglichkeit der angeforderten Rolle mit bestehenden Rollen;
- falls die Rollenübernahme möglich ist, müssen evtl. Aktionen durchgeführt werden, die die Koexistenz der Rollen $R_{n+1}$, $R_j$ gewährleisten.

Folgende Verträglichkeitsprüfungen bzw. -antworten und darauf folgende Aktionen werden bei der Anforderung der Rolle mit zwei Rollenparametern $R_{n+1}$ ($P_1$, $P_2$) bei bestehender Rolle mit zwei Rollenparametern $R_j(P_1, P_2)$ vorgesehen:

- Kompatibel:      ja/nein
- Art der Prüfung:

    - Keine Interaktion

    - Allgemeine Prüfung:
      Prüfe für die Teilnehmeranschlußeinheit $TAE_i$ die Verträglichkeit der Rollen $R_{n+1}$ und $R_j$

    - Parameterinteraktion:
      Prüfe Rollenparameter von $R_{n+1}$, $R_j$ auf erforderliche.
      Art und Weise

    z.B.:      $P_1(R_{n+1})$ != $P_1(R_j) \rightarrow$ Übernahme

         andernfalls: $\rightarrow$ Ablehnen

    - Leistungsmerkmal-Spezifikation verhindert Interaktion z.B.: CFU kann nur in Ruhe aktiviert werden, d.h. ein Teilnehmer, der eine Rückfrage initiiert hat und somit "offhook" ist, kann CFU nicht aktivieren.

Bei der Art der Prüfung kann hierbei gegebenenfalls zusätzlich berücksichtigt werden:

- Zeitliche Prüfung:
  Zeit der Rollenübernahme $R_j$ entscheidet
- Rufbezogene Prüfung (nur für dynamische. Rollen)

$$CallId(R_{n+1}) = CallId(R_j), \text{ dann Reaktion}_i$$

$$\text{andernfalls Reaktionk}$$

- Zustandsabhängige Prüfung:

$$Z(LM_{n+1}) = a, \qquad \text{dann Reaktion}_i$$

$$\text{andernfalls Reaktion}_k$$

Zur Gewährleistung des Zusammenspiels zweier Leistungsmerkmale, die funktional verträglich sind, müssen z.T. verschiedenen Operationen durchgeführt werden, die folgende Aufgaben erfüllen:

- Konsistenz der Rollen
- Vermeiden von Deadlocks
- Geordnete Rückkehr in das "übergeordnete" Leistungsmerkmal

Die evtl. notwendigen Bearbeitungsschritte bei Rollenverträglichkeit können im Verfahren zur Auflösung von LM-Interaktionen an der Stelle der Rollenübernahme eingebunden und nach erfolgter Übernahme durchgeführt werden.

Die Aktionen, die nach erfolgter Verträglichkeitsprüfung eingeleitet werden können, sind:

- Rolle $R_{n+1}$ uneingeschränkt akzeptieren
- $R_{n+1}$ zurückweisen
  Aktivierung-/Aufruf des Leistungsmerkmals wird unterbunden.
- $R_j$ aufgeben, $LM_j$ deaktivieren
- Parameter von $LM_j$ aktualisieren
- Rollenweitergabe
  Prüfen, ob Empfänger die Rolle überhaupt übernehmen darf;

$$\text{z.B.: } R_j \rightarrow P_1(R_{n+1})$$

oder.: Weitergabe der dynamische. Rolle $R_j(A, call_i)$ an die TAE B
- Rollentransformation (aus Kombination der Rollen)
- Ereignisgenerierungspunkttransformation
  Spezifische $LM_j$-Ereignisgenerierungspunkte werden vom Rolleninhaber $R_j$ zum neuen Rolleninhaber $P_1(R_{n+1})$ transformiert;
- Displaytext an TAE verschicken;
  z.B.: zum Rolleninhaber von $R_j$
- Sonderbehandlung für best. Leistungsmerkmal-Konstellation Spezielle Behandlungsroutine wird vorgesehen
  z.B. max. 3-fach umleiten

Eine genaue Beschreibung der Verträglichkeitsprüfungen, d.h. welche Parameter der zwei beteiligten Rollen, bzw. auch der Inhaber der Rolle werden auf Übereinstimmung geprüft, und eine genaue Beschreibung der Aktionen ist notwendig, um diese allgemein in einer Matrix hinterlegen zu können.

Vorzugsweise wird eine Interaktion erst bei Auftreten -also nicht möglichst weit vorausschauend-behandelt, um die Prüfungen von Partnerrollen möglichst zu reduzieren, bzw. ganz zu vermeiden. Am Beispiel Rufumleitung CFU und selektiver Anrufschutz TCS sieht dies folgendermaßen aus:

Bei der Aktivierung von CFU wird ein evtl. aktives Merkmal TCS des Rufumleitungsziels nicht überprüft. Dies geschieht erst, wenn der umgeleitete Ruf dem Ziel angeboten wird, d.h. das aufrufende Ereignis für TCS auftritt. Dies erleichtert die Rollenprüfung wesentlich und ist im Vernetzungsfall eine praktikable Lösung.

Für die Gewährleistung des Zusammenspiels zweier kompatibler Leistungsmerkmale und damit der zugehörigen Rollen sind verschiedene Aktionen notwendig, die vom Leistungsmerkmal-Interaktions-Manager FIM angestoßen werden können, wenn eine neue Rolle von einer Teilnehmeranschlußeinheit übernommen werden soll.

Eine solche Aktion ist beispielsweise die Ereignisgenerierungspunkt-Transformation, die nachstehend anhand des in Figur 6 gezeigten Beispiels der Interaktion zwischen "Autom. Rückruf bei besetzt" ARBS und "Rufumleitung" CFU. Zwischen A der TAE A und der TAE B ist der "Autom. Rückruf bei besetzt" ARBS aktiviert mit A als Initiator. Für die TAE B ist eine "Rufumleitung" CFU zur TAE C aktiviert. Die Teilnehmeranschlußeinheiten A, B und C haben alle zugehörigen statischen Rollen übernommen (siehe a in Figur 6). Wenn der Teilnehmer B den Zustand frei (= idle) erlangt, übernimmt A die Rolle DynARBSInitiator(B,1). Wenn A den Ruf entgegennimmt, wird die Verbindung zu B hinzugefügt und die zugehörige dynamische Rolle DynARBSPartner(A,1) abgefragt (siehe b in Figur 6). Mit dem Aufbau der Verbindung zu B tritt das Ereignis für den Aufruf von CFU auf. Dies führt zur Abfrage aller erforderlicher dynamischer Rollen, wobei deren Kompatibilität mit den jeweils bestehenden Rollen für die einzelnen TAE A, B und C überprüft werden (siehe c in Figur 6). Bei der Überprüfung der beiden Rollen DynCFUSource und DynARBSPartner für die TAE B wird die ggf. benutzerabhängig festgelegte Spezifikation berücksichtigt, um festzustellen, ob der Rückruf umgeleitet werden soll oder nicht. Soll der Rückruf umgeleitet werden, so sind die beiden Rollen kompatibel, es müssen jedoch einige Aktionen vorgenommen werden. Die dynamische Rolle der Rufumleitungsquelle B, DynARBSPartner, muß von C übernommen werden, so daß C dynamischer Partner von ARBS wird. Das Leistungsmerkmal ARBS erwartet das Ereignis, daß der ARBS-Partner den Ruf entgegennimmt und der entsprechende Ereignisgenerierungspunkt für die Verbindung b ist gesetzt. Wird der Ruf jedoch zu einer anderen Ziel-TAE umgeleitet, so wird dieser Ereignisgenerierungspunkt nie erreicht. Der Ereignisgenerierungspunkt muß folglich zu diesem anderen, mit dem Ruf verbundenen Ziel transformiert werden (zur Verbindung c), um einen Stillstand im Funktionsablauf ARBS zu vermeiden. Um die Koexistenz der beiden Leistungsmerkmale sicherzustellen müssen diese beiden Aktionen, nämlich Übernahme der dynamischen Rollen und Transformation der Ereignisgenerierungspunkte ausgeführt werden. Das Ergebnis ist in Figur 6 unten dargestellt.

**Patentansprüche**

1. Verfahren zur Auflösung von Leistungsmerkmal-Interaktionen (FI) in einem Kommunikationssystem mit voneinander entkoppelter Vermittlungs-Steuerung (BSN) und Leistungsmerkmalsteuerung (FN) mit einer Vielzahl von Leistungsmerkmalen ($LM_i$, $LM_j$), dadurch gekennzeichnet, daß die jeweils auf unterschiedliche Teilnehmeranschlußeinheiten (A, B, C, D; $Device_A$, $Device_B$, $Device_C$) verschiedenartig wirkenden Leistungsmerkmale ($LM_i$, $LM_j$) dementsprechend in mehrere Rollen ($Rolle_{i1}$, $Rolle_{i2}$, $Rolle_{i3}$, $Rolle_{j1}$, $Rolle_{j2}$) aufgeteilt sind, die im Verlauf der jeweiligen Leistungsmerkmalabläufe von einzelnen Teilnehmeranschlußeinheiten (A, B, C, D; $Device_A$, $Device_B$, $Device_C$) übernommen werden, wobei vor Übernahme einer neuen Rolle ($Rolle_{i1}$, $Rolle_{i2}$, $Rolle_{i3}$, $Rolle_{j1}$, $Rolle_{j2}$) jeweils die Verträglichkeit dieser neuen Rolle ($Rolle_{i1}$, $Rolle_{i2}$, $Rolle_{i3}$, $Rolle_{j1}$, $Rolle_{j2}$) mit bereits übernommenen Rollen ($Rolle_{i1}$, $Rolle_{i2}$, $Rolle_{i3}$, $Rolle_{j1}$, $Rolle_{j2}$) überprüft wird.

2. Verfahren nach Anspruch 1, dadurch gekennzeichnet, daß bei zusätzlicher Übernahme einer Rolle ($Rolle_{i1}$, $Rolle_{i2}$, $Rolle_{i3}$, $Rolle_{j1}$, $Rolle_{j2}$) durch eine Teilnehmeranschlußeinheit (A, B, C, D; $Device_A$, $Device_B$, $Device_C$) spezielle Aktionen durchgeführt werden, um das spezifizierte Zusammenspiel der gewünschten Leistungsmerkmale ($LM_i$, $LM_j$), die Koexistenz aller übernommenen Rollen ($Rolle_{i1}$, $Rolle_{i2}$, $Rolle_{i3}$, $Rolle_{j1}$, $Rolle_{j2}$) sowie die Vermeidung von Stillständen des Funktionsablaufes zu erreichen.

3. Verfahren nach Anspruch 1 oder 2, dadurch gekennzeichnet daß das Überprüfen der Verträglichkeit der Rollen ($Rolle_{i1}$, $Rolle_{i2}$, $Rolle_{i3}$, $Rolle_{j1}$, $Rolle_{j2}$) eine Überprüfung der Rollenparameter einschließt.

4. Verfahren nach einem der vorhergehenden Ansprüche, dadurch gekennzeichnet, daß ein Leistungsmerkmal ($LM_i$, $LM_j$) in bei seiner Aktivierung vor seinem Aufruf zu übernehmende statische Rollen (CFUSource, CFUTarget) und in bei seinem Aufruf zu übernehmende dynamische Rollen (DynCFUSource, DynCFUTarget) aufgeteilt wird.

5. Kommunikationssystem mit einer Leistungsmerkmal-Steuerung (FN) und einer Vermittlungssteuerung (BSN), die voneinander entkoppelt sind und über eine Schnittstelle miteinander kommunizieren, zur Durchführung eines Verfahrens nach einem der vorhergehenden Ansprüche, gekennzeichnet durch einen der Leistungsmerkmal-Steuerung (FN) zugeordneten, im Bereich der Schnittstelle angeordneten Leistungsmerkmal-Interaktions-Mananger (FIM) zum Verteilen von durch die Vermittlungssteuerung (BSN) mitgeteilten Ereignissen an hieran interessierte Leistungsmerkmale ($LM_i$, $LM_j$) und zum Überprüfen der Verträglichkeit der Koexistenz von gleichzeitig für dieselbe Teilnehmeranschlußeinheit (A, B, C, D; $Device_A$, $Device_B$, $Device_C$) wirksamen Leistungsmerkmalen ($LM_i$, $LM_j$).

## Claims

1. Method for resolving feature interactions (FI) in a communications system with mutually decoupled basic switching node (BSN) and feature node (FN) having a multiplicity of features ($LM_i$, $LM_j$), characterized in that the features ($LM_i$, $LM_j$), which in each case act differently on different devices (A, B, C, D; $Device_A$, $Device_B$, $Device_C$), are correspondingly divided into a number of rolls ($Rolle_{i1}$, $Rolle_{i2}$, $Rolle_{i3}$, $Rolle_{j1}$, $Rolle_{j2}$) which are taken over by individual devices (A, B, C, D; $Device_A$, $Device_B$, $Device_C$) in the course of the respective feature runs, in which arrangement, before a new roll ($Rolle_{i1}$, $Rolle_{i2}$, $Rolle_{i3}$, $Rolle_{j1}$, $Rolle_{j2}$) is taken over, the compatibility of this new roll ($Rolle_{i1}$, $Rolle_{i2}$, $Rolle_{i3}$, $Rolle_{j1}$, $Rolle_{j2}$) with rolls already taken over ($Rolle_{i1}$, $Rolle_{i2}$, $Rolle_{i3}$, $Rolle_{j1}$, $Rolle_{j2}$) is checked.

2. Method according to Claim 1, characterized in that when a roll ($Rolle_{i1}$, $Rolle_{i2}$, $Rolle_{i3}$, $Rolle_{j1}$, $Rolle_{j2}$) is additionally taken over by a device (A, B, C, D; $Device_A$, $Device_B$, $Device_C$), special actions are performed in order to achieve the specified interaction of the desired features ($LM_i$, $LM_j$), the coexistence of all rolls ($Rolle_{i1}$, $Rolle_{i2}$, $Rolle_{i3}$, $Rolle_{j1}$, $Rolle_{j2}$) taken over and the avoidance of stoppages in the sequence of functions.

3. Method according to Claim 1 or 2, characterized in that the checking of the compatibility of the rolls ($Rolle_{i1}$, $Rolle_{i2}$, $Rolle_{i3}$, $Rolle_{j1}$, $Rolle_{j2}$) includes checking the roll parameters.

4. Method according to one of the preceding claims, characterized in that a feature ($LM_i$, $LM_j$) is divided into static rolls (CFRSource, CFRTarget) to be taken over on its activation before it is called up and into dynamic rolls (DynCFRSource, DynCFRTarget) to be taken over when it is called up.

5. Communications system with a feature node (FN) and a basic switching node (BSN) which are decoupled from one another and communicate with one another via an interface, for performing a method according to one of the preceding claims, characterized by a feature interaction manager (FIM), which is allocated to the feature node (FN) and is arranged in the area of the interface, for distributing events notified by the basic switching node (BSN) to features ($LM_i$, $LM_j$) which are interested in these events, and for checking the compatibility of the coexistence of features ($LM_i$, $LM_j$) which are simultaneously active for the same device (A, B, C, D; $Device_A$, $Device_B$, $Device_C$).

## Revendications

1. Procédé pour la résolution d'interactions de facilités offertes aux usagers (FI) dans un système de communication avec commande de commutation (BSN) et commande de facilités offertes aux usagers (FN) découplées l'une de l'autre et avec de nombreuses facilités offertes aux usagers ($LM_i$, $LM_j$), caractérisé par le fait qu'on divise les facilités offertes aux usagers ($LM_i$, $LM_j$) agissant différemment sur des unités de raccordement d'abonné différentes (A, B, C, D ; $Device_A$, $Device_B$, $Device_C$) en plusieurs rôles ($Rolle_{i1}$, $Rolle_{i2}$, $Rolle_{i3}$, $Rolle_{j1}$, $Rolle_{j2}$) qui sont pris en charge au cours des exécutions de facilités offertes aux usagers respectives par des unités de raccordement d'abonné individuelles (A, B, C, D ; $Device_A$, $Device_B$, $Device_C$) de telle sorte que, avant la prise en charge d'un nouveau rôle ($Rolle_{i1}$, $Rolle_{i2}$, $Rolle_{i3}$, $Rolle_{j1}$, $Rolle_{j2}$), la compatibilité de ce nouveau rôle ($Rolle_{i1}$, $Rolle_{i2}$, $Rolle_{i3}$, $Rolle_{j1}$, $Rolle_{j2}$) avec des rôles déjà pris en charge ($Rolle_{i1}$, $Rolle_{i2}$, $Rolle_{i3}$, $Rolle_{j1}$, $Rolle_{j2}$) est contrôlée à chaque fois.

2. Procédé selon la revendication 1, caractérisé par le fait que, lors de la prise en charge supplémentaire d'un rôle ($Rolle_{i1}$, $Rolle_{i2}$, $Rolle_{i3}$, $Rolle_{j1}$, $Rolle_{j2}$) par une unité de raccordement d'abonné (A, B, C, D ; $Device_A$, $Device_B$, $Device_C$), on exécute des actions spéciales pour permettre la coexistence spécifiée des facilités offertes aux usagers souhaitées ($LM_i$, $LM_j$) et la coexistence de tous les rôles pris en charge ($Rolle_{i1}$, $Rolle_{i2}$, $Rolle_{i3}$, $Rolle_{j1}$, $Rolle_{j2}$) et pour éviter des arrêts de l'exécution de fonction.

3. Procédé selon la revendication 1 ou 2, caractérisé par le fait que le contrôle de la compatibilité des rôles (Rolle$_{i1}$, Rolle$_{i2}$, Rolle$_{i3}$, Rolle$_{j1}$, Rolle$_{j2}$) inclut un contrôle des paramètres de rôles.

4. Procédé selon l'une des revendications précédentes, caractérisé par le fait qu'on divise une caractéristique de performance (LM$_i$, LM$_j$) en rôles statiques (CFUSource, CFUTarget) à prendre en charge lors de l'activation de la caractéristique de performance avant l'appel de celle-ci et en rôles dynamiques (DynCFUSource, DynCFUTarget) à prendre en charge lors de l'appel de celle-ci.

5. Système de communication comportant une commande de facilités offertes aux usagers (FN) et une commande de commutation (BSN) qui sont découplées l'une de l'autre et qui communiquent entre elles par l'intermédiaire d'une interface, pour la mise en oeuvre d'un procédé selon l'une des revendications précédentes, caractérisé par un gestionnaire d'interactions de facilités offertes aux usagers (FIM) associé à la commande de facilités offertes aux usagers (FN) et agencé dans le domaine de l'interface en vue de la distribution d'événements arrivant à la commande de commutation (BSN) à des facilités offertes aux usagers (LM$_i$, LM$_j$) intéressées par ces événements et en vue du contrôle de la compatibilité de la coexistence de facilités offertes aux usagers (LM$_i$, LM$_j$) actives simultanément pour la même unité de raccordement d'abonné (A, B, C, D ; Device$_A$, Device$_B$, Device$_C$).

**FIG 1**

**FIG 2**

**FIG 3**

# FIG 4

$LM_i$

$Rolle_{i1}$      $Rolle_{i2}$      $Rolle_{i3}$

$Device_A$      $Device_B$      $Device_C$

$LM_i$      wirkt auf

# FIG 5

B   CFUSource (C)

C   CFUTarget (B)

Nach erfolgter
Aktivierung

A   callId=1   B   CFUSource (C)
DynCFUSource (A,1)

C   CFUTarget (B)
DynCFUTarget (A,1)

Dyn. Aufruf der
Umleitung
Rufen der
CFU-Quelle

## FIG 6

a)

ARBSInitiator (B) [A]　　　　[B] CFUSource (C)
　　　　　　　　　　　　　　　　　ARBSPartner (A)

　　　　　　　　　　　　　　　　[C] CFUTarget (B)

b)

ARBSInitiator (B) ↑[A] ←—o—--→ [B] CFUSource (C)
　　　　　　　　　　　　call Id=1　　　ARBSPartner (A)
**DynARBSInitiator (B,1)**　　　　　　**DynARBSPartner (A,1)**

　　　　　　　　　　　　　　　　[C] CFUTarget (B)

c)

ARBSInitiator (B) ↑[A] ←—o—--→ [B] CFUSource (C)
　　　　　　　　　　　　call Id=1　　　ARBSPartner (A)
DynARBSInitiator (C,1)　　　　　　　DynARBSPartner (A,1)
　　　　　　　　　　　　　　　　　　**DynCFUSource (A,1)**

　　　　　　　　　　　　　　　　[C] CFUTarget (B)
　　　　　　　　　　　　　　　　　　**DynCFUTarget (A,1)**

d)

ARBSInitiator (B) ↑[A] ←—call Id=1— [B] CFUSource (C)
　　　　　　　　　　　　　　o--→　　ARBSPartner (A)
DynARBSInitiator (C,1)　　│ b
　　　　　　　　　　　　　│→
　　　　　　　　　　　　　└—→ [C]↓ CFUTarget (B)
　　　　　　　　　　　　　　c　　　**DynARBSPartner (A,1)**

$R_{n+1}$

## FIG 7

| | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| 1 CCOActor | | | | | | | | | | | | | | |
| 2 CCOHold | | | | | | | | | | | | | | |
| 3 CCOPartner | | | | | | | | | | | | | | |
| 4 CFUSource | | | | | | | | | | | | | | |
| 5 DynCFUSource | | | | | | | | | | | | | | |
| 6 CFUTarget | | | | | | | | | | | | | | |
| 7 DynCFUTarget | | | | | | | | | | | | | | |
| 8 CFUSourceCaller | | | | | | | | | | | | | | |
| 9 ConfMaster | | | | | | | | | | | | | | |
| 10 ConfParticipant | | | | E | | | | | | | | | | |
| 11 TCSSource | | | | | | | | | | | | | | |
| 12 DynTCSSource | | | | | | | | | | | | | | |
| 13 TCSTarget | | | | | | | | | | | | | | |
| 14 DynTCSTarget | | | | | | | | | | | | | | |

$R_j$